(19) Europäisches Patentamt
European Patent Office
Office européen des brevets

(11) **EP 1 561 148 B1**

(12) **EUROPÄISCHE PATENTSCHRIFT**

(45) Veröffentlichungstag und Bekanntmachung des Hinweises auf die Patenterteilung:
**30.07.2008 Patentblatt 2008/31**

(21) Anmeldenummer: 03810976.5

(22) Anmeldetag: **10.11.2003**

(51) Int Cl.:
*G02C 7/02* *(2006.01)*

(86) Internationale Anmeldenummer:
**PCT/EP2003/012521**

(87) Internationale Veröffentlichungsnummer:
**WO 2004/044642 (27.05.2004 Gazette 2004/22)**

(54) **DOPPELPROGRESSIVES BRILLENGLAS**

DOUBLE-PROGRESSIVE EYEGLASS LENS

VERRE PROGRESSIF DOUBLE DE LUNETTES

(84) Benannte Vertragsstaaten:
**DE ES FR GB IT**

(30) Priorität: **13.11.2002 DE 10252814**

(43) Veröffentlichungstag der Anmeldung:
**10.08.2005 Patentblatt 2005/32**

(73) Patentinhaber: **Rodenstock GmbH**
**80469 München (DE)**

(72) Erfinder:
• **HAIMERL, Walter**
**80337 München (DE)**
• **ALTHEIMER, Helmut**
**87650 Baisweil-Lauchdorf (DE)**

• **ESSER, Gregor**
**81735 München (DE)**
• **WEHNER, Edda**
**82275 Emmering (DE)**
• **WELK, Andrea**
**81547 München (DE)**

(74) Vertreter: **Hock, Joachim**
**Müller-Boré & Partner**
**Grafinger Strasse 2**
**81671 München (DE)**

(56) Entgegenhaltungen:
EP-A- 0 724 179    WO-A-02/061496
US-A- 6 074 061    US-A- 6 123 422

**Beschreibung**

Die Erfindung bezieht sich auf ein Verfahren zum Herstellen doppelprogressiven Brillenglases mit einer vorgefertigten progressiven Fläche und einer zweiten progressiven Fläche zur Korrektur einer sphärischen Fehlsichtigkeit oder einer zylindrischen Fehlsichtigkeit.

Konventionelle Brillengläser sind vom Stand der Technik her bekannt. Sie zeichen sich dadurch aus, dass es eine begrenzte Anzahl von progressiven Fläche, sogenannten Basiskurven gibt, mit denen der komplette Wirkungsbereich, bestehend aus Sphäre, Zylinder, Achse und Addition abgedeckt wird. Die Anpassung an die individuelle Wirkung erfolgt dann mit einer Rezeptfläche, die sphärisch oder asphärisch, torisch oder atorisch ist. Dies weist den Nachteil auf, dass ein solches Progressivglas nur für die Mitte der Basiskurve optimale Eigenschaften aufweist, was insbesondere auch für die Addition gilt. Wenn man eine individuell atorische Fläche auf die Rückseite aufbringt, kann man auch die Eigenschaften außerhalb der zentralen Bereiche des Standes der Technik verbessern.

Ebenfalls vom Stand der Technik bekannt sind Progressivgläser von Rodenstock, die mittels der sogenannten "Individual Lens Technology (ILT)" hergestellt wurden, d.h. unter Berücksichtigung kundenspezifischer Parameter wie Pupillendistanz, Hornhautscheitelabstand, Fassungsvorneigung und Fassungsscheibenwinkel. Hierzu wird beispielsweise auf die wo 01/81985 A2, WO 01/81981 A2, WO 01/81982 A2 und auf die WO 01/81979 verwiesen.

In der US 6074061 von Tokai werden unsymmetrische Flächen beschrieben und auch als Stand der Technik skizziert, wobei jedoch die Iso-Astigmatismuslinien im Progressionskanal und im Nahbereich nahezu parallel zur Hauptlinie verlaufen. Auch hat der Astigmatismus in Gebrauchsstellung eine ähnliche Struktur wie der Flächenastigmatismus.

Die WO 98/01787 beschreibt ein progressives Brillenglas, wobei der Betrag des Flächenastigmatismus wenigstens einer der zu Brechwertänderung beitragenden Flächen längs mindestens eines Schnitts des Brillenglases mit einer horizontalen Ebene ein lokales Maximum, das einen Abstand von nicht mehr als 4 mm von der Hauptlinie hat und wenigstens ein lokales Minimum aufweist, das nicht auf der Hauptlinie liegt und dessen Abstand von der Hauptlinie größer als der des lokalen Maximums ist.

Die hier als Stand der Technik genannten Dokumente beziehen sich auf einfach progressive Brillengläser.

US 6,123,422 offenbart ein dopellprogressives Brillenglas, wobei die beiden progressiven Flächen zueinander fehlausgerichtet sind.

Aufgabe der Erfindung ist es, ein Verfahren zum Herstellen sowie eine Verwendung von doppelprogressiven Brillengläsern mit einer vorgefertigten progressiven Fläche und einer zweiten progressiven Fläche zur Korrektur einer sphärischen oder einer zylindrischen Fehlsichtigkeit anzugeben, wobei die Brillengläser für jede Wirkung optimale Eigenschaften aufweisen.

Diese Aufgabe wird durch ein Verfahren zum Herstellen eines doppelprogressiven Brillenglases mit den im Anspruch 1 angegebenen Merkmalen gelöst. Bevorzugte Ausführungsformen ergeben sich aus den Unteransprüchen.

Gemäß der Erfindung wird ein Verfahren zum Herstellen eines doppelprogressiven Brillenglases mit einer vorgefertigten ersten progressiven Fläche und einer zweiten progressiven Fläche zur Korrektur einer sphärischen Fehlsichtigkeit oder einer zylindrischen Fehlsichtigkeit, bereitgestellt, wobei das Verfahren die folgenden Schritte umfaßt:

- Auswahl der ersten, vorgefertigten progressiven Fläche aus einem bestehenden Basiskurvensystem;
- Berechnung der zweiten progressiven Fläche, wobei die Berechnung derart erfolgt, dass

  - die Flächeneigenschaften der zweiten progressiven Fläche in der Nähe der Hauptblicklinie in Gebrauchsstellung des Brillenglases unsymmetrisch sind, wobei die Unsymmetrie durch den Symmetriefaktor $S_A$ bestimmt wird, der zu dem Niveau A definiert ist durch das Verhältnis des kleineren zu dem größeren horizontalen Abstand zwischen der Hauptblicklinie und dem Ort, an dem der Flächenastigmatismus im Horizontalschnitt den Wert A [dpt] erreicht; und der Symmetriefaktor $S_{0,2}$ der zweiten progressiven Fläche in mindestens einem Horizontalschnitt im Progressionsbereich kleiner als 0,5 ist; und
  - bei der zweiten progressiven Fläche in einem Bereich von 2 mm rechts und links der Hauptblicklinie der Flächenastigmatismus im Horizontalschnitt ein Minimum durchläuft;

- Fertigen des doppelprogressiven Brillenglases.

Es wird somit zu einer vorgefertigten progressiven Fläche eine zweite progressive Fläche hinzuoptimiert, wobei diese zweite progressive Fläche je nach Lage der vorgefertigten progressiven Fläche auf der Vorder- oder auf der Rückfläche angeordnet werden kann. Diese zweite progressive Fläche zeichnet sich durch eine hohe Unsymmetrie der Flächeneigenschaften in der Nähe der Hauptblicklinie aus. Diese vorgenannte Eigenschaft ist unbedingt notwendig, um durchgehend optimale Abbildungseigenschaften zu erzielen. Somit ist es dadurch auch möglich, die Addition für alle Wirkungskombinationen richtig einzustellen.

Die Hauptblicklinie oder Konstruktionslinie ist für die Mitte der Basiskurse in der Progressionszone optimal an die Hauptblicklinie angepasst. Die Hauptlinie ist bei den älteren Gläsern eine ebene und bei modernen Gleitsichtgläsern eine räumlich gewundene Kurve, bei der der Inset von der Basiskurve und von der Addition der Fläche abhängig ist.

Wird eine vorgefertigte progressive Fläche, die sowohl Vorder- als auch Rückfläche sein kann und die für 1 dpt Addition ausgelegt ist, für ein doppelprogressives Glas mit 2 dpt Addition verwendet, so ist der Verlauf der Hauptlinie auf der progressiven Fläche anders ausgeprägt als der Verlauf der sich ergebenden Hauptblicklinie. Dabei ist unerheblich, ob die bereits existierende progressive Fläche eine ebene oder gewundene Hauptlinie aufweist.

Die Hauptblicklinie durchstößt an der vorgefertigten Fläche Gebiete, bei denen der Flächenastigmatismus nicht minimal ist. Somit muss auf der zweiten progressiven Fläche ein Flächenastigmatismus dergestalt eingeführt werden, dass er nach Betrag und Richtung den der vorgefertigten progressiven Fläche gerade kompensiert. Wenn das doppelprogressive Glas nach dem Zentrierkreuz der originalen Fläche zentriert ist, befindet sich das besagte Gebiet in der unteren Progressionszone oder im Nahbereich. Bei anderer Zentrierung kann es auch nach oben bis in den Fernbereich hineinwandern.

Ferner ist der Gradient des Flächenastigmatismus der vorgefertigten progressiven Fläche an der Hauptblicklinie zu beachten, der zum Teil erhebliche Werte annehmen kann. Somit muss er von der zweiten progressiven Fläche kompensiert werden, um annähernd horizontale symmetrische Abbildungseigenschaften zu gewährleisten. Daraus resultiert eine charakteristische Flächenform, die in der Regel zumindest in der unteren Hälfte des Progressionskanals eine ausgeprägte Unsymmetrie zeigt, was den Flächen von einfach progressiven Brillengläser in der Regel fehlt. Weiter ist es äußerst vorteilhaft, wenn die hinzuoptimierte Fläche eine gewundene Hauptlinie aufweist. Die beschriebene Unsymmetrie kann durch folgende Parameter charakterisiert werden:

$dxL_A$ ist der horizontale Abstand zwischen dem Ort links (nasal) der Hauptblicklinie, an dem der Flächenastigmatismus den Wert A erreicht und $dxR_A$ der horizontale Abstand zwischen dem Ort rechts (temporal) der Hauptblicklinie, an dem der Flächenastigmatismus den Wert A erreicht.

$dxMax_A$ ist der größere der beiden genannten Abstände und $dxMin_A$ der kleinere der beiden Abstände:

$$dxMax_A = \max(dxL_A, dxR_A)$$

und

$$dxMin_A = \min(dxL_A, dxR_A).$$

Dann ist der Quotient oder Symmetriefaktor

$$S_A = dxMin_A / dxMax_A$$

ein Maß für die Symmetrie oder Unsymmetrie des Astigmatismusverlaufs einer Fläche. Je größer die Abweichung des Symmetriefaktors von 1, desto unsymmetrischer ist die Fläche. Eine symmetrische Fläche hätte auf allen Niveaus den Symmetriefaktor von 1.0.

Bevorzugt ist es, dass der Symmetriefakor $S_{0,3}$ der progressiven Fläche in mindestens einem Horizontalschnitt kleiner als 0,8 ist und dass zur Korrektur eines Astigmatismus des Auges mit einer Achslage von 0° $\pm$ 5° oder 90° $\pm$ 5° der Symmetriefaktor $S_{0,3}$ der progressiven Fläche in mindestens einem Horizontalschnitt kleiner als 0,8 ist.

Ferner sollte bei der progressiven Fläche in einem Bereich von 2 mm rechts und links der Hauptblicklinie der Flächenastigmatismus im Horizontalschnitt ein Minimum durchlaufen, wobei bevorzugt ist, dass bei der progressiven Fläche in einem Bereich von 1 mm rechts und links der Hauptblicklinie der Flächenastigmatismus im Horizontalschnitt ein Minimum durchläuft.

Weiter kann bei der progressiven Fläche in einem Bereich von 6 mm rechts und links der Hauptblicklinie der Flächenastigmatismus im Horizontalschnitt ein weiteres, von ersterem unterschiedliches Minimum durchlaufen.

Die vorgenannten Eigenschaften der progressiven Fläche sollten zwischen y = +30 mm und -30 mm vorhanden sind und bevorzugt ist es, wenn die genannten Eigenschaften der progressiven Fläche zwischen y = +20 mm und -20 mm vorhanden sind.

Die zweite progressive Fläche kann sowohl die Rückseite wie auch die Vorderseite des doppelprogressiven Brillenglases sein.

Ferner sollte die horizontale Komponente des Gradienten des Flächenastigmatismus der progressiven Fläche an der Hauptblicklinie einen Wert aufweisen, der von Null verschieden ist.

Das doppelprogressive Brillenglas zeichnet sich ferner dadurch aus, dass der Flächenbrechwert $D = 0.5*(n-n')(1/r_1+1/r_2)$ von oben nach unten entlang der Hauptblicklinie abnimmt.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1 die Vorderfläche des doppelprogressiven Brillenglases mit einem Flächenastigmatismus in Gebrauchsstellung im Horizontalschnitt bei y = -13 mm,

Fig. 2 die Rückfläche des doppelprogressiven Brillenglases mit einem Flächenastigmatismus in Gebrauchsstellung im Horizontalschnitt bei y = -13 mm,

Fig. 3a und Fig. 3b ein Ausführungsbeispiel für eine unsymmetrische Rückfläche, die zu einer gegebenen Vorderfläche hinzugerechnet wurde,

Fig. 4a und Fig. 4b ein Ausführungsbeispiel für eine unsymmetrische Vorderfläche, die zu einer gegebenen Rückfläche hinzugerechnet wurde.

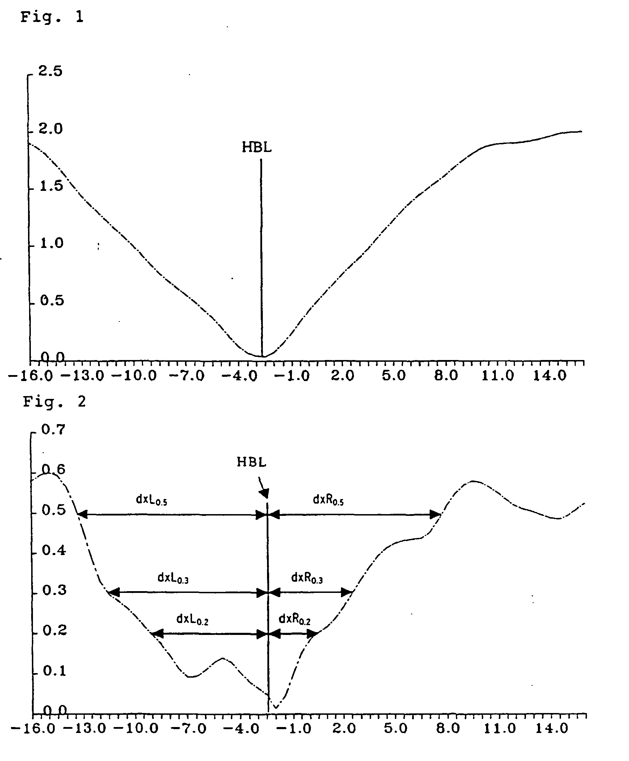

Wie aus Figur 1 hervorgeht, ergibt sich in den Horizontalschnitten eine zur Hauptblicklinie in etwa symmetrische Kurve des Astigmatismus in Gebrauchsstellung. In diesem Beispiel liegt die Hauptblicklinie im Koordinatensystem der Vorderfläche bei x = -2,7 mm.

Dieses symmetrische Verhalten in Gebrauchsstellung ist für Gleitsichtgläser typisch. Figur 2 zeigt die Rückfläche des doppelprogressiven Brillenglases mit einem Flächenastigmatismus in Gebrauchsstellung im Horizontalschnitt bei y = -13 mm. Die Hauptblicklinie ist die vertikale Linie, die mit HBL gekennzeichnet ist. Sie liegt auf der Rückfläche bei x = -2,5 mm. Die Strecken $dxL_A$ und $dxR_A$ für A = 0,5, 0,3 und 0,2 dpt sind eingezeichnet. Die nasale Seite befindet sich in dieser Darstellung links. Wie aus Figur 2 hervorgeht, hat die Rückfläche die Symmetrie in der Umgebung der Hauptblicklinie völlig verloren. Die Hauptblicklinie liegt im Koordinatensystem der Rückfläche bei x = - 2,5 mm, das ist etwa 0,5 mm links des globalen Minimums. Ein ganz ähnliches unsymmetrisches Bild ergibt sich, wenn man nicht die Rückfläche an eine gegebene Vorderfläche, sondern umgekehrt eine Vorderfläche an eine gegebene Rückfläche anpasst.

Bei der beispielhaften Fläche ist auf dem 0,2 dpt Niveau der linke Abstand $dxL_{0,2}$ = 6,5 mm und der rechte Abstand $dxR_{0,2}$ = 3,0 mm. Somit ergibt sich ein Symmetriefaktor von $S_{0,2}$ = 0,46.

Auf dem 0,3 dpt Niveau ist der linke Abstand $dxL_{0,3}$ = 9,0 mm und der rechte Abstand $dxR_{0,3}$ = 5,1 mm. Der Symmetriefaktor ergibt sich damit zu $S_{0,3}$ = 0,57.

Auf dem 0,5 dpt Niveau ist der linke Abstand $dxL_{0,5}$ = 10,9 mm und der rechte Abstand $dxR_{0,5}$ = 10,2 mm. Der Symmetriefaktor ergibt sich damit zu $S_{0,5}$ = 0,94.

Somit wird deutlich, dass die beschriebene Unsymmetrie eine Eigenschaft der näheren Umgebung der Hauptlinie ist und nach außen, also mit steigendem Astigmatismusniveau abnimmt. In der Figur 2 befinden sich die kürzeren Strekken alle rechts von der Hauptblicklinie. In einem an einer vertikalen Achse gespiegelten Glas befänden sie sich alle links, aber der Symmetriefaktor wäre der gleiche. Der Symmetriefaktor ist also ein von Koordinatensystemen und Spiegelungsoperationen um vertikal verlaufende Achsen unabhängiges Maß für die (Un-)Symmetrie einer Fläche.

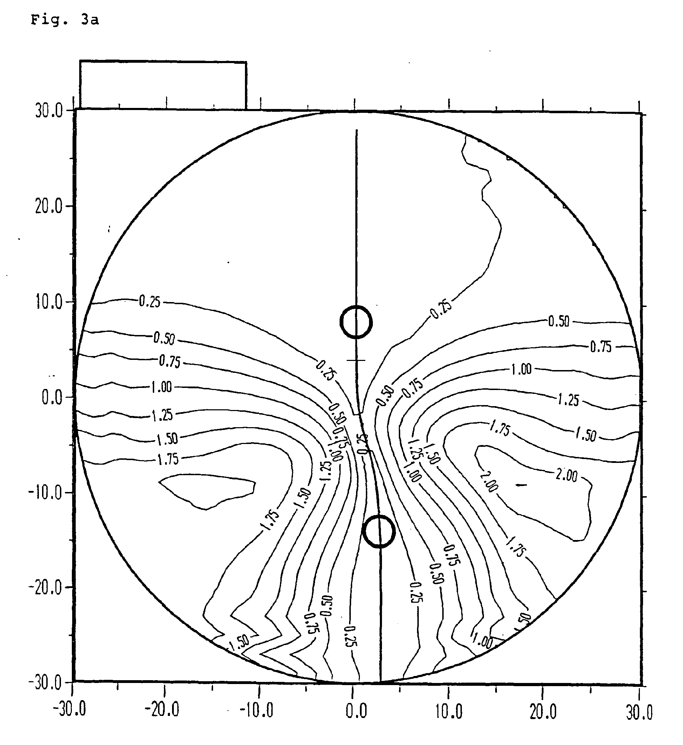

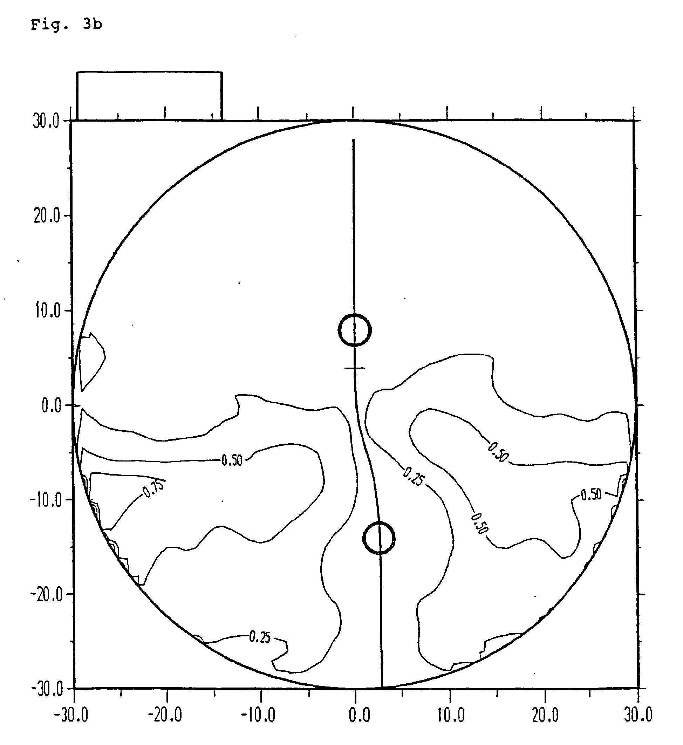

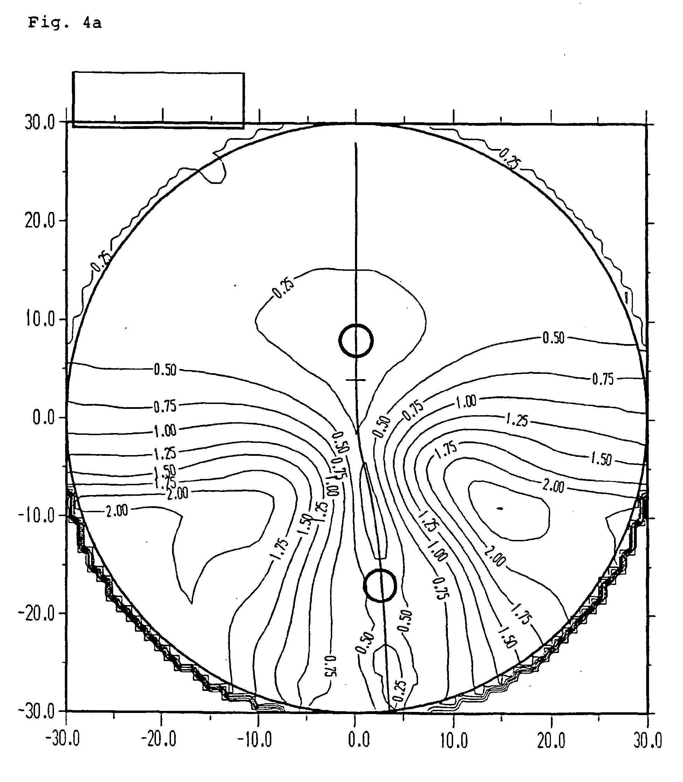

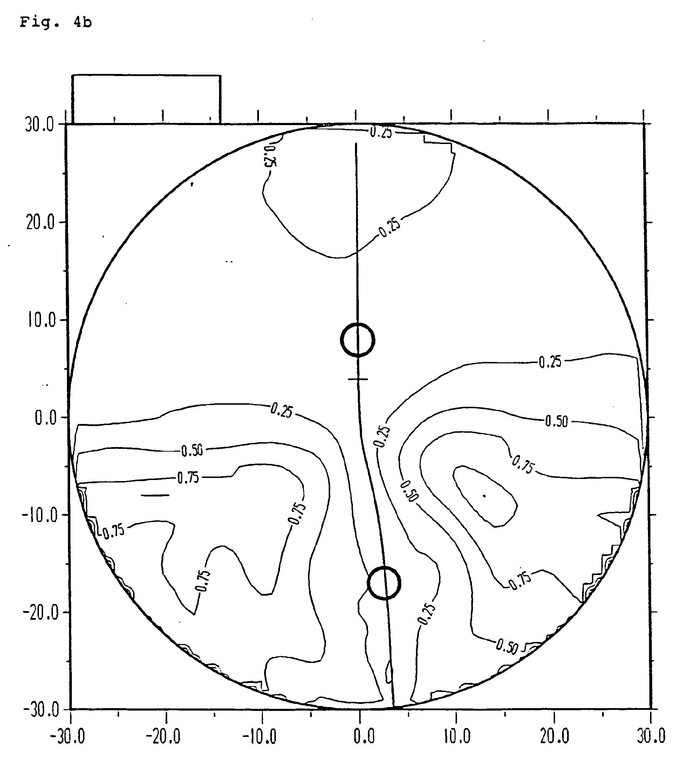

Die Figuren 3a/3b und 4a/4b zeigen Ausführungsbeispiele für eine unsymmetrische Rückfläche bzw. Vorderfläche, die zu einer vorgefertigten Vorderfläche bzw. Rückfläche hinzugerechnet wurde. Aus den Figuren 3b und 4b erkennt man deutlich die starke Abweichung von der Horizontalsymmetrie im inneren Nahbereich.

## Patentansprüche

1. Verfahren zum Herstellen eines doppelprogressiven Brillenglases mit einer vorgefertigten ersten progressiven Fläche und einer zweiten progressiven Fläche zur Korrektur einer sphärischen Fehlsichtigkeit oder einer zylindrischen Fehlsichtigkeit, umfassend die folgenden Schritte:

- Auswahl der ersten, vorgefertigten progressiven Fläche aus einem bestehenden Basiskurvensystem;
- Berechnung der zweiten progressiven Fläche, wobei die Berechnung derart erfolgt, dass

- die Flächeneigenschaften der zweiten progressiven Fläche in der Nähe der Hauptblicklinie in Gebrauchsstellung des Brillenglases unsymmetrisch sind, wobei die Unsymmetrie durch den Symmetriefaktor $S_A$ bestimmt wird, der zu dem Niveau A definiert ist durch das Verhältnis des kleineren zu dem größeren horizontalen Abstand zwischen der Hauptblicklinie und dem Ort, an dem der Flächenastigmatismus im Horizontalschnitt den Wert A [dpt] erreicht; und der Symmetriefaktor $S_{0,2}$ der zweiten progressiven Fläche in mindestens einem Horizontalschnitt im Progressionsbereich kleiner als 0,5 ist; und
- bei der zweiten progressiven Fläche in einem Bereich von 2 mm rechts und links der Hauptblicklinie der Flächenastigmatismus im Horizontalschnitt ein Minimum durchläuft;

- Fertigen des doppelprogressiven Brillenglases.

**2.** Verfahren zum Herstellen eines doppelprogressiven Brillenglases nach Anspruch 1, **dadurch gekennzeichnet, dass** der Symmetriefaktor $S_{0,3}$ der zweiten progressiven Fläche in mindestens einem Horizontalschnitt kleiner als 0,8 ist.

**3.** Verfahren zum Herstellen eines doppelprogressiven Brillenglases nach Anspruch 1, **dadurch gekennzeichnet, dass** zur Korrektur eines Astigmatismus des Auges mit einer Achslage von 0° oder 90° der Symmetriefaktor $S_{0,3}$ der zweiten progressiven Fläche in mindestens einem Horizontalschnitt kleiner als 0,8 ist.

**4.** Verfahren zum Herstellen eines doppelprogressiven Brillenglases nach einem der Ansprüche 1 bis 3, **dadurch gekennzeichnet, dass** bei der zweiten progressiven Fläche in einem Bereich von 1 mm rechts und links der Hauptblicklinie der Flächenastigmatismus im Horizontalschnitt ein Minimum durchläuft.

**5.** Verfahren zum Herstellen eines doppelprogressiven Brillenglases nach einem der Ansprüche 1 bis 4, **dadurch gekennzeichnet, dass** bei der zweiten progressiven Fläche in einem Bereich von 6 mm rechts und links der Hauptblicklinie der Flächenastigmatismus im Horizontalschnitt ein weiteres, von ersterem unterschiedliches Minimum durchläuft.

**6.** Verfahren zum Herstellen eines doppelprogressiven Brillenglases nach einem der Ansprüche 1 bis 5, **dadurch gekennzeichnet, dass** die in den Ansprüchen 1 bis 5 genannten Eigenschaften der zweiten progressiven Fläche zwischen y = +30 mm und - 30 mm vorhanden sind.

**7.** Verfahren zum Herstellen eines doppelprogressiven Brillenglases nach einem der Ansprüche 1 bis 5, **dadurch gekennzeichnet, dass** die in den Ansprüchen 1 bis 6 genannten Eigenschaften der progressiven Fläche zwischen y = +20 mm und -20 mm vorhanden sind.

**8.** Verfahren zum Herstellen eines doppelprogressiven Brillenglases nach einem der Ansprüche 1 bis 7, **dadurch gekennzeichnet, dass** die zweite progressive Fläche die Rückseite des doppelprogressiven Brillenglases ist.

**9.** Verfahren zum Herstellen eines doppelprogressiven Brillenglases nach einem der Ansprüche 1 bis 7, **dadurch gekennzeichnet, dass** die zweite progressive Fläche die Vorderseite des doppelprogressiven Brillenglases ist.

**10.** Verfahren zum Herstellen eines doppelprogressiven Brillenglases nach einem der Ansprüche 1 bis 9, **dadurch gekennzeichnet, dass** die horizontale Komponente des Gradienten des Flächenastigmatismus der zweiten progressiven Fläche an der Hauptblicklinie einen Wert aufweist, der von Null verschieden ist.

**11.** Verfahren zum Herstellen eines doppelprogressiven Brillenglases nach einem der Ansprüche 1 bis 10, **dadurch gekennzeichnet, dass** der Flächenbrechwert $D = 0.5* (n-n')(1/r_1+1/r_2)$ von oben nach unten entlang der Hauptblicklinie abnimmt.

**Claims**

**1.** Method for the production of a double-progressive spectacle lens having a pre-manufactured first progressive surface and a second progressive surface for correction of a spherical vision defect or a cylindrical vision defect, comprising the following steps:

- selection of the first pre-manufactured progressive surface from an existing basic curve system;
- calculation of the second progressive surface, the calculation being effected such that

- the surface properties of the second progressive surface are asymmetrical in the vicinity of the main viewing line in the position of use of the spectacle lens, the asymmetry being determined by the symmetry factor $S_A$ which is defined relative to the level A by the ratio of the smaller to the larger horizontal spacing between the main viewing line and the position at which the surface astigmatism in the horizontal section attains the value A [dpt]; and the symmetry factor $S_{0.2}$ of the second progressive surface in at least one horizontal section in the progressive region being less than 0.5; and
- in the case of the second progressive surface, a minimum extends in a region of 2 mm to the right and left of the main viewing line of the surface astigmatism in the horizontal section;

- manufacture of the double-progressive spectacle lens.

2. Method for the production of a double-progressive spectacle lens according to claim 1, **characterised in that** the symmetry factor $S_{0.3}$ of the second progressive surface in at least one horizontal section is less than 0.8.

3. Method for the production of a double-progressive spectacle lens according to claim 1, **characterised in that,** for correction of an astigmatism of the eye with an axis position of 0° or 90°, the symmetry factor $S_{0.3}$ of the second progressive surface in at least one horizontal section is less than 0.8.

4. Method for the production of a double-progressive spectacle lens according to one of the claims 1 to 3, **characterised in that,** in the case of the second progressive surface, a minimum extends in a region of 1 mm to the right and left of the main viewing line of the surface astigmatism in the horizontal section.

5. Method for the production of a double-progressive spectacle lens according to one of the claims 1 to 4, **characterised in that,** in the case of the second progressive surface, a further minimum, which differs from the former, extends in a region of 6 mm to the right and left of the main viewing line of the surface astigmatism in the horizontal section.

6. Method for the production of a double-progressive spectacle lens according to one of the claims 1 to 5, **characterised in that** the properties mentioned in claims 1 to 5 of the second progressive surface are present between y = +30 mm and -30 mm.

7. Method for the production of a double-progressive spectacle lens according to one of the claims 1 to 5, **characterised in that** the properties mentioned in claims 1 to 6 of the progressive surface are present between y = +20 mm and -20 mm.

8. Method for the production of a double-progressive spectacle lens according to one of the claims 1 to 7, **characterised in that** the second progressive surface is the rear side of the double-progressive spectacle lens.

9. Method for the production of a double-progressive spectacle lens according to one of the claims 1 to 7, **characterised in that** the second progressive surface is the front side of the double-progressive spectacle lens.

10. Method for the production of a double-progressive spectacle lens according to one of the claims 1 to 9, **characterised in that** the horizontal component of the gradient of the surface astigmatism of the second progressive surface has a value at the main viewing line which is different from zero.

11. Method for the production of a double-progressive spectacle lens according to one of the claims 1 to 10, **characterised in that** the surface power $D = 0.5 * (n-n')(1/r_1+1/r_2)$ decreases from top to bottom along the main viewing line.

**Revendications**

1. Procédé en vue de la fabrication d'un verre de lunettes doublement progressif ayant une première surface progressive pré-ébauchée et une seconde surface progressive en vue de la correction d'une amétropie sphérique ou d'une amétropie cylindrique, comprenant les étapes suivantes:

- la sélection de la première surface progressive pré-ébauchée à partir d'un système de courbes de base existant,
- le calcul de la seconde surface progressive, le calcul se faisant de telle sorte que

- - les propriétés superficielles de la seconde surface progressive sont non symétriques dans le voisinage de la ligne de vision principale en position d'utilisation du verre de lunette, la non symétrie étant déterminée par le facteur de symétrie $S_A$, qui est défini au niveau A par le rapport de l'écart horizontal le plus petit à l'écart horizontal le plus grand entre la ligne de vision principale et l'endroit, auquel l'astigmatisme de surface atteint en coupe horizontale la valeur A [dtp]; et le facteur de symétrie $S_{0,2}$ de la seconde surface progressive étant inférieur à 0,5 dans au moins une coupe horizontale dans le domaine de progression; et
- - dans le cas de la seconde surface progressive, dans un domaine de 2 mm à droite et à gauche de la ligne de vision principale, l'astigmatisme de surface passant par un minimum dans la coupe horizontale;

- la finition d'un verre de lunettes doublement progressif.

2. Procédé en vue de la fabrication d'un verre de lunettes doublement progressif selon la revendication 1, **caractérisé en ce que** le facteur de symétrie $S_{0,3}$ de la seconde surface progressive est inférieur à 0,8 dans au moins une coupe horizontale.

3. Procédé en vue de la fabrication d'un verre de lunettes doublement progressif selon la revendication 1, **caractérisé en ce qu'**en vue de la correction d'un astigmatisme de l'oeil avec une position d'axe de 0° ou de 90°, le facteur de symétrie $S_{0,3}$ de la seconde surface progressive est inférieur à 0,8 dans au moins une coupe horizontale.

4. Procédé en vue de la fabrication d'un verre de lunettes doublement progressif selon l'une quelconque des revendications 1 à 3,
**caractérisé en ce que,** pour la seconde surface progressive dans un domaine de 1 mm à droite ou à gauche de la ligne de vision principale, l'astigmatisme de surface passe par un minimum dans la coupe horizontale.

5. Procédé en vue de la fabrication d'un verre de lunettes doublement progressif selon l'une quelconque des revendications 1 à 4,
**caractérisé en ce que,** pour la seconde surface progressive dans un domaine de 6 mm à droite et à gauche de la ligne de vision principale, l'astigmatisme de surface passe, dans la coupe horizontale, par un autre minimum différent du premier minimum.

6. Procédé en vue de la fabrication d'un verre de lunettes doublement progressif selon l'une quelconque des revendications 1 à 5,
**caractérisé en ce que** les propriétés de la seconde surface progressive citées dans les revendications 1 à 5 sont présentes entre y = +30 mm et -30 mm.

7. Procédé en vue de la fabrication d'un verre de lunettes doublement progressif selon l'une quelconque des revendications 1 à 5,
**caractérisé en ce que** les propriétés de la surface progressive citées dans les revendications 1 à 6 sont présentes entre y = +20 mm et -20 mm.

8. Procédé en vue de la fabrication d'un verre de lunettes doublement progressif selon l'une quelconque des revendications 1 à 7,
**caractérisé en ce que** la seconde surface progressive est la face arrière du verre de lunettes doublement progressif.

9. Procédé en vue de la fabrication d'un verre de lunettes doublement progressif selon l'une quelconque des revendications 1 à 7,
**caractérisé en ce que** la seconde surface progressive est la face avant du verre de lunettes doublement progressif.

10. Procédé en vue de la fabrication d'un verre de lunettes doublement progressif selon l'une quelconque des revendications 1 à 9,
**caractérisé en ce que** le composant horizontal du gradient de l'astigmatisme de surface de la seconde surface progressive présente une valeur dans la ligne de vision principale, qui est différente de zéro.

11. Procédé en vue de la fabrication d'un verre de lunettes progressif selon l'une quelconque des revendications 1 à 10,
**caractérisé en ce que** l'indice de distorsion de surface $D = 0,5*(n-n')(1/r_1 + 1/r_2)$ baisse du haut vers le bas le long de la ligne de vision principale.

Fig. 1

Fig. 2

Fig. 3a

Fig. 3b

Fig. 4a

Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0181981 A2
- WO 0181982 A2
- WO 0181979 A
- US 6074061 A
- WO 9801787 A
- US 6123422 A